# EUROPEAN PATENT SPECIFICATION

(11) **EP 0 620 131 B1**
(45) Date of publication and mention of the grant of the patent: **08.01.1997**
(21) Application number: 94302681.5
(22) Date of filing: 14.04.1994
(51) Int. Cl.: B60C 15/06

(54) **Radial tyre for a motor cycle**
Radialer Luftreifen für Motorräder
Bandage pneumatique radial pour moto

(30) Priority: 16.04.1993 JP 113696/93
(43) Date of publication of application: 19.10.1994
(73) Proprietor: Sumitomo Rubber Industries Ltd., Kobe-shi, Hyogo-ken (JP)
(72) Inventor: Igarashi, Yasuo, Kawanishi-shi, Hyogo-ken (JP); Hirose, Kazuhiro, Kobe-shi, Hyogo-ken (JP); Fukumoto, Toru, Akashi-shi, Hyogo-ken (JP); Okada, Ryozo, Takarazuka-shi, Hyogo-ken (JP)
(74) Representative: Stewart, Charles Geoffrey

(56) References cited:
- EP-A- 0 124 617
- EP-A- 0 456 438
- PATENT ABSTRACTS OF JAPAN vol. 16, no. 44 (M-1207) 4 February 1992 & JP-A-03 248 903 (SUMITOMO RUBBER IND. LTD.) 6 November 1991

## Description

The present invention relates to a radial tyre for a motor cycle capable of maintaining the ride comfort while improving steering stability and durability in high speed running.

In the recent years, along with improvements to highway networks and higher vehicle speeds, radial tyres have been introduced for the motor cycles.

Such a radial tyre for a motor cycle comprises a carcass with a radial structure and a belt layer. To improve the ride comfort Japanese Patent Publication Hei. 3-8961 proposed using a belt layer of belt cords arranged parallel to the tyre equator instead of the conventional crossed belt ply in which the cords of two plies are crossed to each other.

The parallel belt ply is, as compared with the crossed belt ply, smaller in rigidity and is intended to improve the ride comfort by lowering the bending rigidity in the radial direction of the tread ground contacting surface and thus to improve the ground contacting performance.

The parallel belt ply construction is, however, accompanied with a decrease of lateral rigidity of the tread. Further, since the radial tyre has a radial arrangement of carcass cords, it is inferior in the lateral rigidity of the entire tyre, causing a "flabby" phenomenon when turning, in particular, and hence the steering stability tends to be sacrificed.

Therefore, in order to enhance the rigidity of tyre side walls, Japanese Patent Publication Hei. 3-8961, also, proposes to heighten the turned up portion of the carcass, employ a hard rubber with a hardness of 60 degrees or more as the bead apex rubber, and heighten the bead apex rubber. For example EP-A-0456438, showing a tyre according to the preamble of claim 1, proposes to extend the apex rubber beyond the height of the sidewall such that its upper end underlies the axially outer part of the breaker. Further, it has been proposed to employ a cord reinforcing layer covering the turned up portion in the tyre side wall.

However, if the hardness of the bead apex rubber is set at 63 degres Shore A (60 degrees JISA) or more and the height of the bead apex rubber is heightened in order to improve the rigidity of the side wall itself to a level sufficient for steering stability, since the bead apex rubber extends from the bead core in one united body, the longitudinal rigidity of tyre becomes so high that the ride comfort is poor. Still more, the heat generation of the bead increases, and durability tends to decline.

Incidentally, since the carcass cords are arranged radially, the lateral rigidity is not improved as much as expected by heightening the turned up part of the carcass, or using the cord reinforcing layer.

As mentioned above, the steering stability, ride comfort and durability are generally contradictory performances factors, and are not solved sufficiently by the prior art means.

To improve ride comfort and stability JP-A-03248903 proposes using a triangular bead apex comprising a first part contacting the bead core and consisting of a relatively hard rubber and a second part extending radially outward of the first part and consisting of a softer rubber.

After intensive studies by the inventors into the characteristics of the bead apex rubber, its properties, size and volume and its effects on steering stability, vibration, ride comfort and durability of the bead, it has been discovered that, by dividing the bead apex rubber into a soft rubber part adjacent to the bead core and a hard rubber part extending from the soft rubber part, the camber thrust can be kept high, the vertical spring constant can be lowered so as to maintain ride comfort, and the heat generation in the bead can be suppressed.

It is hence a primary object of the invention to present a tyre for motor cycle capable of enhancing the steering stability without sacrificing the performances such as comfort of riding and durability.

According to one aspect of the present invention, a radial tyre for motor cycle comprises a carcass having a main portion extending from a tread through side walls to a bead core in each of two beads and a pair of turned up portions turned up one around each bead core, and composed of at least one carcass ply of cords laid at an angle of 70 to 90 degrees to the tyre equator, a belt layer disposed radially outside the carcass and in the tread, and composed of at least one belt ply of cords with modulus of elasticity of 600 kg/mm² or more wound spirally nearly parallel to the tyre equator, and a bead apex having a substantially triangular section disposed on the bead core between the main part and turned up part of the carcass, said tread having a width between tread edges in the axial direction which is larger than the maximum width of the tyre in the axial direction at the side walls and the tread surface being an approximately arc shape in the tyre meridian section, characterised in that the bead apex consists of a soft apex part SA composed of a soft rubber composition with a hardness of 52 to 63 degrees Shore A (50 to 60 degrees JISA) extending radially outwardly from a bottom surface adjacent to the bead core and a hard apex part HA composed of a hard rubber composition with hardness of 73 to 97 degrees Shore A (70 to 95 degrees JISA) extending radially outwardly from the soft apex part SA, a height h1 of the radially upper end P1 of the soft apex part SA from a bead base is 0.20 to 0.40 times a height h0 of the tread end from the bead base, and a height h2 of the radially upper end P2 of the hard apex part HA from the bead base is 0.50 to 1.25 times the height h0 of the tread end.

Since the hard apex part HA of the bead apex rubber extends from the bead to a high position in the side wall, the lateral rigidity is improved so as to obtain sufficient camber thrust in turning at any camber angle, and the turning performance is enhanced. Further, the response to handling becomes quick, and nervousness of the vehicle is effectively suppressed to significantly improve the steering stability. As for ride comfort due to the hard apex it is reduced by the soft apex part SA which is lower in hardness by 10 degrees or more (preferably 20 degrees or more) than the hard apex part HA. Since the soft apex part SA is provided on the bead core with a range of 0.20 to 0.40 times the tread end height, the longitudinal spring constant is lowered so as to improve the ride comfort while still maintaining lateral rigidity. The complex modulus of the soft apex part thus may be lowered, or rubber with a small loss tan δ may be used for the soft apex in order to lower heat generation.

An embodiment of the present invention will now be described, by way of example, referring to the attached diagrammatic drawings, in which;
Fig. 1 is a sectional view of an embodiment of the invention;
Fig. 2 is a sectional view showing a magnified view of a bead;
Fig. 3 is a sectional view showing another embodiment;
Fig. 4 is a perspective view showing an example of a belt ply strip;
Fig. 5 is a sectional view showing winding of the belt ply strip;
Fig. 6 is a partial magnified view of the wound belt ply strip; and
Fig. 7 is a plan view showing an example of a terminal end of the belt ply strip.

A pneumatic tyre 1 for a motor cycle comprises a tread 2, two side walls 3 each extending inwardly in the radial direction from both ends of the tread 2 and two beads 4 one located at the inward end of each sidewall 3 and reinforced by a bead core 5. A tread surface in the tyre meridian section extends approximately along an arc between tread edges E1 and E2, and a tread straight width TW between the tread edges in the axial direction is larger than the maximum with of the tyre in the axial direction at the side walls.

The pneumatic tyre 1, also, comprises a carcass 6 extending between the bead cores 5, a belt layer 7 disposed radially outside the carcass 6 and under the tread 2, and a bead apex rubber 9 with a triangular sectional shape extending outwardly in the radial direction from each bead core 5.

The carcass 6 has a main portion 6a extending from the tread 2 through the sidewalls 3 to the bead core 5 and a pair of turned up portions 6b each turned up around the bead core 5 from inside to outside in the axial direction. The carcass 6 comprises at least one, one in this embodiment, carcass ply of cords inclined at an angle of 70 to 90 degrees. The carcass cords are made of nylon, rayon, polyester, aromatic polyamide, or other organic fibre cords.

The turned up portion 6b extends radially outwardly to a height h6 from the bead base BL set in the range of 0.5 to 1.25 times the height h0 of the tread edges E1 from the bead base BL.

The belt layer 7 comprises at least one, one in this embodiment, belt ply formed by spirally winding belt cords 11 parallel to the tyre equator C. The belt cords 11 are made of aromatic polyamide, polyester, other organic fibre cords or inorganic fibre cords of a high modulus of elasticity of 600 kg/mm² or more.

As mentioned above, since the carcass has a radial structure, and the belt cords 11 are spirally wound nearly parallel to the tyre equator, the bending rigidity of the tread in the radial direction is low and the ground contact performance is improved. Further, lifting of the tread in high speed travelling is suppressed by the band effect of the belt layer of the belt cord 11 with the modulus of elasticity of 600 kg/mm², so that high speed durability is enhanced. If the modulus of elasticity is less than 600 kg/mm², the rigidity of the tread is insufficient, and high speed durability is lowered. The aromatic polyamide fibre has a high tensile force equivalent to that of steel, and is excellent in flexibility, and is hence used favourably. Since the belt cords 11 are arranged nearly parallel to the tyre equator, travelling stability is excellent. Moreover, since the bending rigidity of the ground contact surface is low, the ground contact area of the tyre in all running conditions is sufficiently wide. As a result, grip increases notably, while it is possible to cope easily with undulations of the road surface, so that a stable grip feeling may be always obtained to maintain stable travelling.

The belt ply is preferably formed by spirally winding a long, narrow band-shaped ply strip 10 of side-by-side belt cords 11, thereby reducing seams and step differences in of the belt ply, and enhancing the durability, uniformity and steering stability.

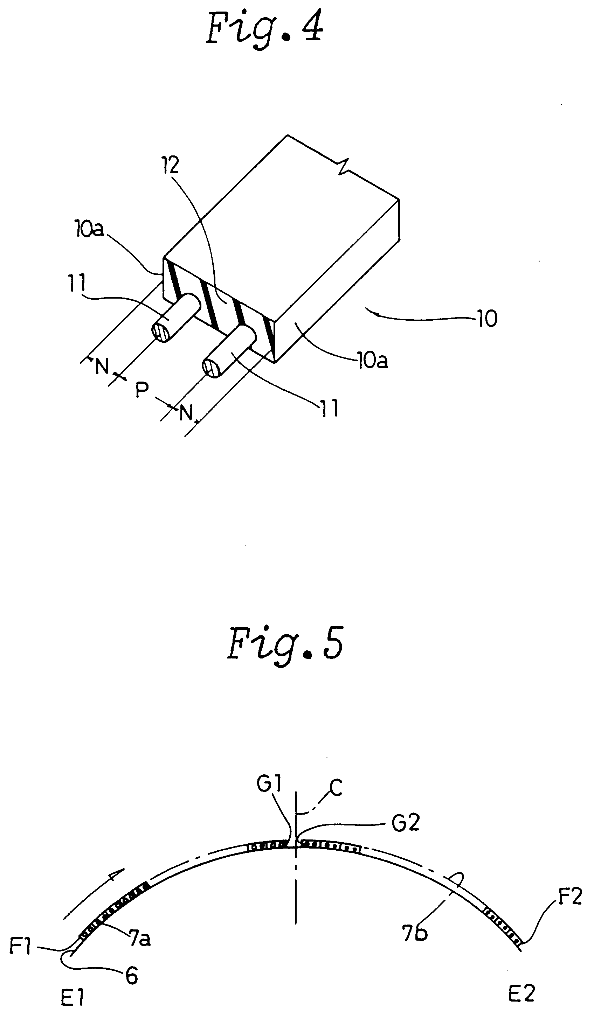

The ply strip 10 has one or plural, two in the embodiment, belt cords 11 in parallel alignment embedded in a topping rubber 12, as shown in Fig. 4.

In the embodiment, the ply strip 10 has a flat rectangular shape, and the distance N from the side edge 10a to the centre of the belt cord at the outermost position from the side edge 10a is set at 1/2 or less of the pitch P of the belt cords 11.

The belt ply may be made of one ply strip 10 continuously wound on the outer circumference of the carcass 6 from one belt edge F1 beyond the tyre equator C to the other belt edge F2. Alternatively the belt ply may consist of left and right ply pieces 7a, 7b each made of one ply strip 10 wound between one belt edges F1, F2 and a point G1, G2 near the tyre equator C.

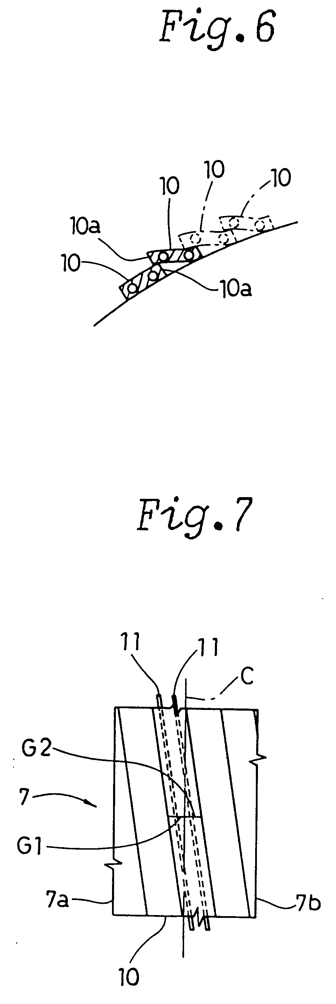

Furthermore, as shown in Fig. 6, the ply strip 10 may be wound in such a manner that one side edge 10a overlaps near the opposite side edge 10a when wound, thereby preventing the ply strip 10 from loosening and peeling at the belt edges F1, F2 where a large force acts in running.

On the other hand, a small gap of less than the pitch P of the belt cords 11 may be provided between the belt pieces 7a, 7b. Also as shown in Fig. 7, it is possible to set the belt plies 10, 10 without a small gap, and to bond the edges of the belt pieces 7a, 7b to each other with an adhesive.

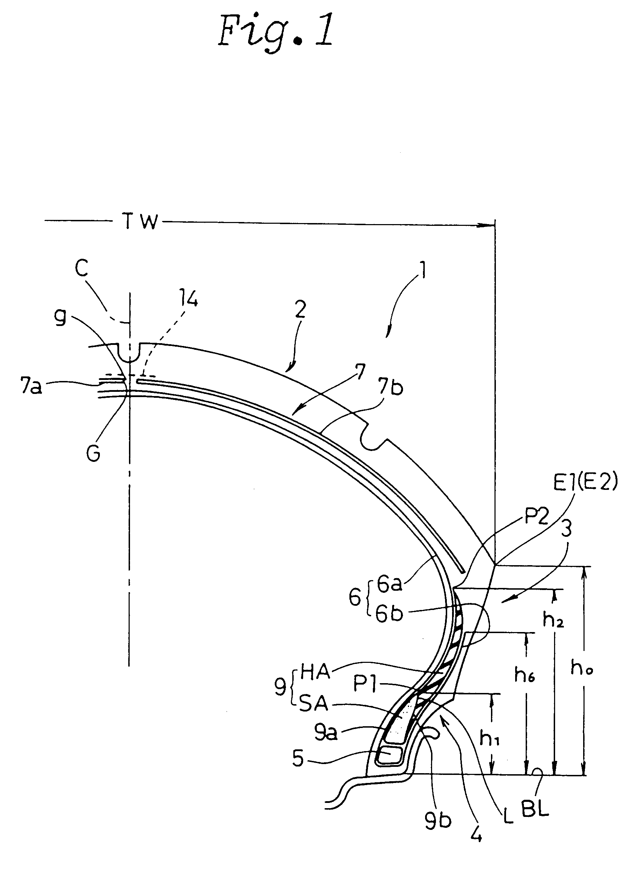

As indicated by dotted line in Fig. 1, on the other hand, by covering the junction of the belt pieces 7a, 7b with a narrow reinforcing piece 14, the small gap g between the belt pieces 7a, 7b is reinforced, thereby preventing formation of a rigidity fault in the belt layer 7.

The bead apex rubber 9 is disposed on the bead core 5 between the main portion 6a and the turned up portion 6b of the carcass 6, and is divided into a soft apex part SA composed of soft rubber composition with a hardness of 52 to 63 degrees Shore A (50 to 60 degrees JISA), preferably 52 to 57 degrees Shore A (50 to 55 degrees JISA), and a hard apex part HA composed of hard rubber composition with hardness of 73 to 97 degrees Shore A (70 to 95 degrees JISA, preferably 78 to 93 degrees Shore A (75 to 90 degrees JISA).

The soft apex part SA has an approximately triangular sectional shape composed of a bottom surface adjacent to the bead core 5, an inner oblique side surface 9a along the main portion 6a of the carcass 6 and an outer oblique side surface 9b. The outer oblique side surface 9b extends approximately in the radial direction. The height h1 of the radially upper end P1 of the soft apex part SA from the bead base BL is 0.20 to 0.40 times the height h0 of the tread edge E1, E2 from the bead base BL.

The hard apex part HA extends outwardly in the radial direction from the outer oblique side surface 9b, and contacts the outer oblique side surface 9b so as to form a contacting surface L. The hard apex part HA has an approximately triangular sectional shape having a contacting surface as a bottom, and the height h2 of the radially upper end P2 of the hard apex part HA from the bead base BL is 0.50 to 1.25 times, preferably 0.8 to 1.25 times the height h0 of the tread edge.

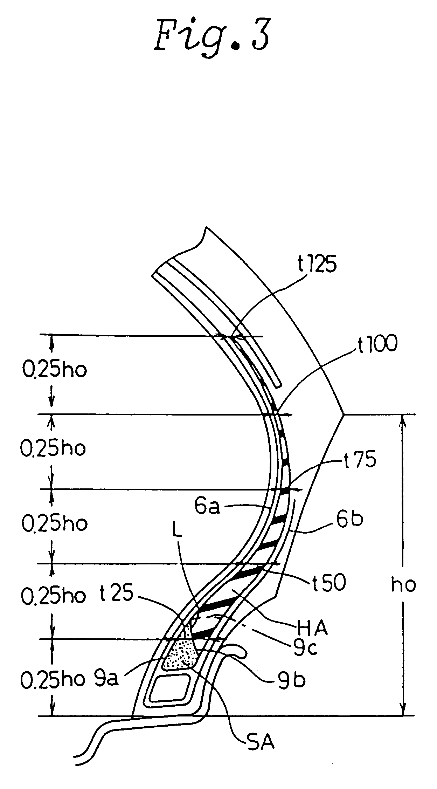

In the soft apex part SA, as shown in Fig. 3, the outer oblique side surface 9b may be inclined inwards in the axial direction to the radial outward direction, or the outer oblique side surface 9b may be apart from the bottom surface so as to detach the hard apex part HA from the bead core 5. Furthermore, as indicated by the single dot chain line in Fig. 3, the soft apex part SA may be formed to a tetragonal shape having the upper surface 9c approximately parallel to the tyre axis.

The soft apex part SA has a complex modulus of elasticity SE* of 30 to 100 kg/cm², preferably 40 to 60 kg/cm², and the hard apex part HA has a complex modulus of elasticity HE* of 150 to 700 kg/cm², preferably 200 to 550 kg/cm². Furthermore the difference (HE* - SE*) of the complex modulus of elasticity HE* and the complex modulus of elasticity SE* is 150 kg/cm² or more.

The hardness of the hard apex part HA is larger than the hardness of the soft apex part SA by 10 degrees or preferably 20 degrees or more.

If the difference (HE* - SE*) becomes less than 150 kg/cm², the rubber properties of both are too close to each other, and the desired effects are not found in the performance factors such as ride comfort and steering stability. In the same way, because the hardness difference is 10 degrees or more, or more preferably 20 degrees or more, the ride comfort and steering stability are improved.

Due to the hard apex part HA, the lateral rigidity of the side wall 3 is be enhanced, and "flabby" feeling when turning and "dizziness" or "nervousness" of vehicle when running straight can be eliminated, and steering stability is improved.

Furthermore, in the side walls 3, in order to absorb vibration and suppress lowering of ride comfort, the loss angle tan δ of the hard apex part HA is preferably set in the range of 0.20 to 0.25. As a result, vibration forces acting on the side walls 3 are attenuated, and noise is lowered.

On the other hand, longitudinal rigidity is improved by the soft apex SA, thereby maintaining ride comfort without sacrificing performance factors such as steering stability.

Accordingly, in the soft apex part SA, compared to the hard apex part HA, the hardness and complex modulus of elasticity SE* are low. This adjusts the lateral rigidity and ride comfort as mentioned above. At the same time, by setting the heights h1, h2 of the upper ends P1, P2 of the soft apex part SA and the hard apex part HA within the specified range, the lateral rigidity is effectively heightened without sacrificing the ride comfort, and the camber thrust when turning is enhanced in particular, thereby improving turning performance.

As for the soft apex part SA, moreover, by setting the loss angle tan δ at 0.08 to 0.15, more preferably 0.08 to 0.12, being smaller than in the hard apex part HA, heat generation by deformation due to rolling of tyre may be suppressed.

The loss angle tan δ and the complex modulus of elasticity E* are those measured by a viscoelasticity spectrometer manufactured by Iwamoto Seisakusho in the condition of temperature of 70 degrees C, frequency of 10 Hz and dynamic strain of 2(±1) %.

Incidentally, for a tyre of 2.75 to 4.50 size specified as high speed type (H type) in JIS D 4203, the bead apex rubber 9 is preferably defined as follows;
the height h1 and the height h2 are preferably 0.4 and 1.25 times the height h0, respectively; then, the sectional thickness t50 (shown in Fig. 3) in the axial direction at the height of 50% of the tread end height h0 from the bead base BL is preferably set to be 0 mm /(4 to 6) mm, when expressed as soft apex part SA thickness/hard apex part HA thickness; the thickness t25 at a height of 25% be (5 to 7)mm/ (0 to 2)mm; the thickness t75 at a height of 75% be 0 mm/(2 to 5)mm; the thickness t100 at a height of 100% be 0/(1 to 3)mm, and the thickness t125 at a height of 125% be 0/(0 to 2) mm, approximately.

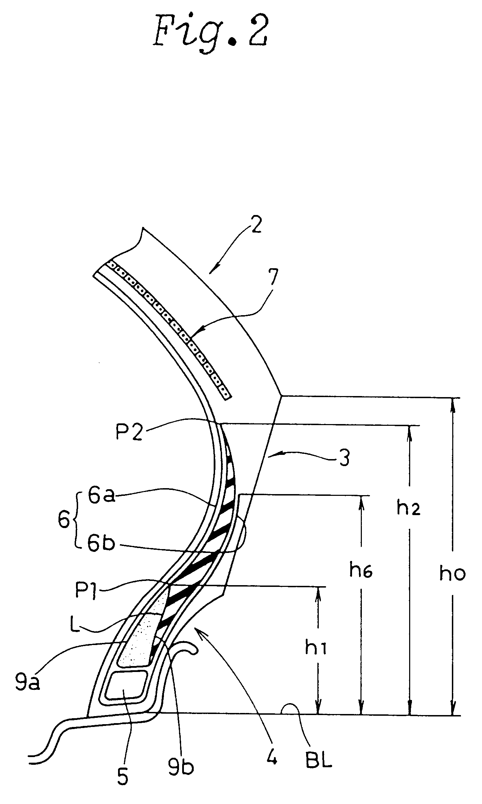

Tyres of size 190/50R17 were fabricated as shown in Figs. 1, 2, 4 and 5, and in the specification as defined in Table 3 (embodiments, comparisons), and were tested. A conventional tyre 1 having only a hard rubber apex was also tested. The rubber compositions are shown in Tables 1, 2.

The test conditions were as follows:
1) Steering stability, flabbiness, ride comfort
   Test tyres were mounted on the rear wheel of a motor cycle, while the front wheel was fitted with a standard 130/70R16 tyre. The vehicle was tested on a test road at a speed of 260 km/hr on a straight lane, and at 220 km/hr on a curved road at a radius of curvature of 400 m. The performance was evaluated by the feel of the test rider. The test results are shown by index in Table 3. The greater figure means the better performance.
2) High speed durability test
   The test tyres, set at an internal pressure of 3.0 kgf/cm² and a load of 355 kg were put on a drum testing machine of 60 inches in diameter. The test was started at an initial speed of 250 km/hr and increased in steps of 10 km/hr every 10 minutes in the speed-up system. The high speed durability test was judged by the running distance until a crack was formed in the tread. In Table 3, the practical example is indicated by index 100, and a greater figure means a better performance.

As a result of the test, embodiments 1 to 7 were judged to be excellent in all test items as compared with the conventional tyre and comparisons 1 to 7.

**Table 1**

| Rubber blends other than invention | | | | |
|---|---|---|---|---|
| | TT Tread rubber, | SW Sidewall rubber, | CC topping rubber, (carcass) | BL topping rubber (belt layer) |
| NR-rubber | --- | 40.0 | 58.0 | 70.0 |
| BR-rubber | --- | 60.0 | --- | --- |
| SBR-rubber (1712) | 100 | --- | 42.0 | --- |
| SBR-rubber (1500) | --- | --- | --- | 30.0 |

| Carbon black | | | | |
|---|---|---|---|---|
| • ISAF | 65 | --- | --- | --- |
| • FEF | --- | 50.0 | --- | --- |
| • GPF (N660) | --- | --- | 26.3 | --- |
| • HAF (N330) | --- | --- | 31.5 | 45.0 |
| Thermoset resin | --- | --- | 3.0 | --- |
| Aromatic oil | 12.8 | 6.0 | --- | 7.0 |
| Resin | --- | 3.0 | 3.0 | 3.0 |
| Wax | 2.75 | 1.2 | --- | --- |
| Anti-agent | 1.79 | 3.0 | --- | 1.0 |
| Stearic acid | 2.0 | 2.5 | 1.7 | 2.0 |
| Zinc white, | 2.5 | 2.5 | 3.0 | 5.0 |
| Sulfur | 1.5 | 1.5 | 3.0 | 3.0 |
| Promoter | 1.5 | 0.68 | 1.08 | 2.5 |
| Retarder | --- | 0.15 | --- | --- |

**Table 2**

| Rubber blends | | | | | | | | |
|---|---|---|---|---|---|---|---|---|
| | HA1 | HA2 | HA3 | HA4 | HA5 | SA1 | SA2 | SA3 |
| NR-rubber | 70 | 100 | 70 | 100 | 70 | 75 | 100 | 70 |
| SBR-rubber | 30 | -- | 30 | -- | 30 | 25 | -- | 30 |
| Reclaim(R500) | -- | -- | -- | -- | -- | -- | -- | -- |
| Oil | 4.0 | 3.0 | 4.0 | 4.0 | 9.0 | 8.4 | 6.0 | 5.0 |
| Stearic acid | 2.5 | 2.0 | 2.5 | 2.3 | 2.5 | 2.0 | 2.0 | 1.5 |
| Zinc white, | 4.0 | 5.0 | 4.0 | 5.0 | 5.0 | 3.7 | 8.0 | 3.0 |
| Sulfur | 2.5 | 1.5 | 2.5 | 2.5 | 2.5 | 1.5 | 2.5 | 2.0 |
| Promoter | 2.5 | 2.0 | 3.5 | 2.5 | 2.5 | 1.1 | 1.0 | 1.0 |
| Resin | 15.0 | 20.0 | 8.0 | 15.0 | 8.0 | 2.0 | 3.0 | 1.0 |

| Carbon black | | | | | | | | |
|---|---|---|---|---|---|---|---|---|
| • HAF | 65 | 50 | 70 | 70 | 60 | -- | -- | -- |
| • GPF | -- | -- | -- | -- | -- | -- | -- | 45 |
| • ISAF | -- | 20 | -- | -- | -- | 50 | 45 | -- |
| Hard clay | -- | -- | -- | -- | -- | -- | -- | 10 |
| Shore A Hardness | 88 | 97 | 91 | 93 | 75 | 59 | 62 | 52 |
| (JISA hardness | 86 | 95 | 88 | 90 | 72 | 57 | 59 | 50) |
| Loss tan δ (degrees) | 0.21 | 0.28 | 0.22 | 0.20 | 0.23 | 0.23 | 0.08 | 0.12 |
| complex modulus E* (kg/cm²) | 310 | 550 | 202 | 303 | 209 | 60 | 54 | 40 |

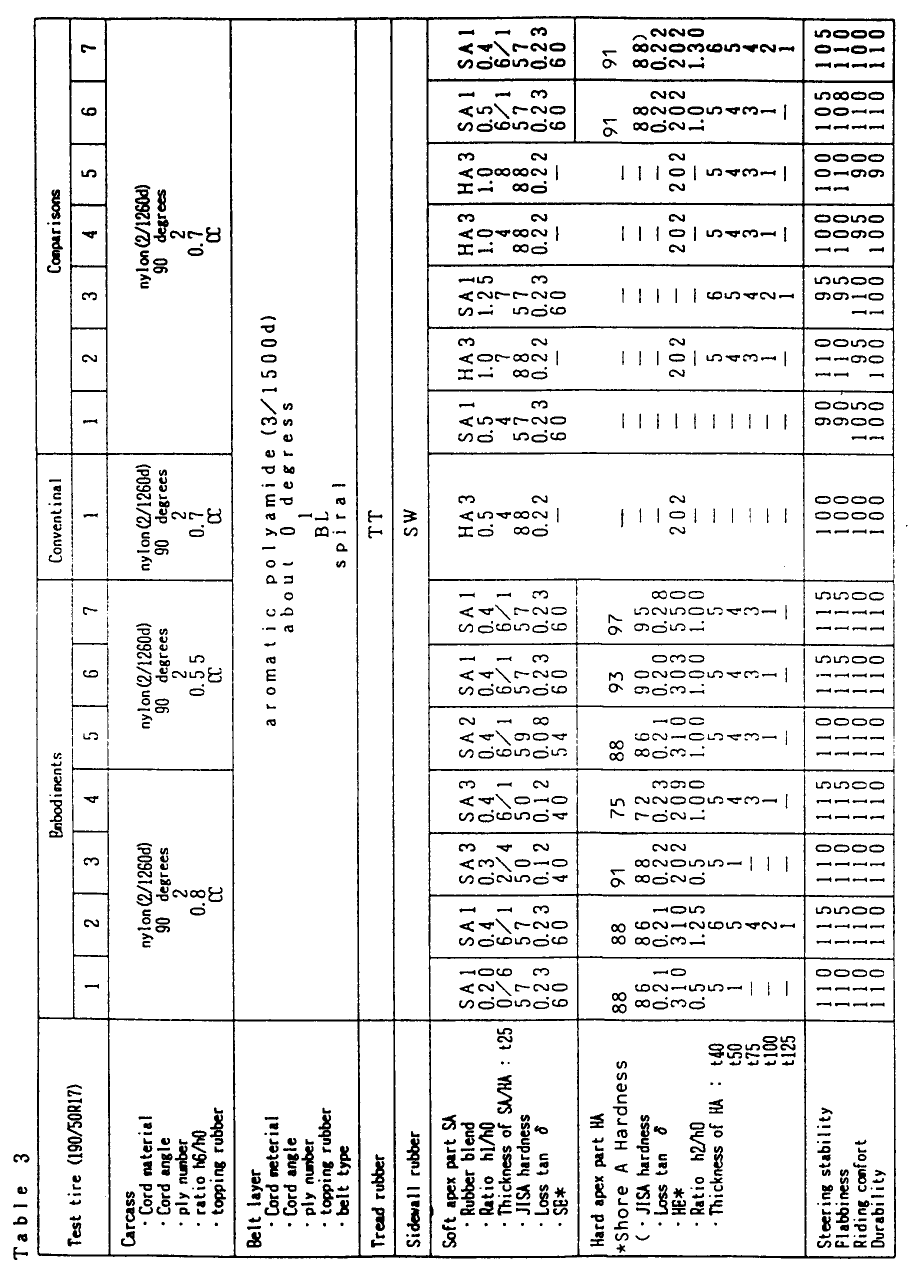

## Claims

1. A radial tyre for a motor cycle comprising a carcass (6) having a main portion (6a) extending from a tread (2) through side walls (3) to a bead core (5) in each of two beads (4) and a pair of turned up portions (6b) turned up one around each bead core (5), and composed of at least one carcass ply of cords laid at an angle of 70 to 90 degrees to the tyre equator, a belt layer (7) disposed radially outside the carcass (6) and in the tread (2), and composed of at least one belt ply of cords (11) with modulus of elasticity of 600 kg/mm² or more wound spirally nearly parallel to the tyre equator, and a bead apex (9) having a substantially triangular section disposed on the bead core (5) between the main part and turned up part (6b) of the carcass, said tread (2) having a width (TW) between tread edges (E1,E2) in the axial direction which is larger than the maximum width of the tyre in the axial direction at the side walls (3) and the tread surface being an approximately arc shape in the tyre meridian section, characterised in that the bead apex (9) comprises a soft apex part SA composed of a soft rubber composition with a hardness of 52 to 63 degrees Shore A (50 to 60 degrees JISA) extending radially outwardly from a bottom surface adjacent to the bead core (5) and a hard apex part HA composed of a hard rubber composition with hardness of 73 to 97 degrees Shore A (70 to 95 degrees JISA) extending radially outwardly from the soft apex part SA, a height h1 of the radially upper end P1 of the soft apex part SA from a bead base is 0.20 to 0.40 times a height h0 of the tread end from the bead base (BL), and a height h2 of the radially upper end P2 of the hard apex part HA from the bead base (BL) is 0.50 to 1.25 times the height h0 of the tread end.

2. A radial tyre for motor cycle of claim 1, characterised in that the soft apex part SA has a complex modulus of elasticity SE* of 40 to 60 kg/cm², and the hard apex part HA has a complex modulus of elasticity HE* of 200 to 550 kg/cm².

3. A radial tyre for motor cycle of claim 1 or 2, characterised in that the difference (HE* - SE*) between the complex modulus of elasticity HE* of the hard apex part HA and the complex modulus of elasticity SE* of the soft apex part SA is 150 kg/cm² or more.

4. A radial tyre for motor cycle of claim 1, 2 or 3, characterised in that the soft apex part SA has substantially an approximately triangular sectional shape composed of a bottom surface adjacent to the bead core (5), an inner oblique side surface along the main portion of the carcass (6a) and an outer oblique side surface, and the hard apex part HA extends outwardly in the radial direction from the outer oblique side surface of the soft apex part SA.

## Patentansprüche

1. Radialreifen für ein Motorrad mit einer Karkasse (6), die einen sich von einer Lauffläche (2) durch Seitenwände (3) zu einem Wulstkern (5) in jedem der beiden Wulste (4) erstreckenden Hauptteil (6a) und ein Paar umgestülpte Teile (6b) aufweist, von denen einer jeweils um einen Wulstkern (5) gestülpt ist, und aus zumindest einer Karkaßlage aus Kordfäden besteht, die unter einem Winkel von 70 bis 90 Grad zu dem Reifenäquator gelegt sind, einer Gürtelschicht (7), die radial außerhalb der Karkasse (6) und in der Lauffläche (2) angeordnet ist und aus zumindest einer Gürtellage aus Kordfäden (11) mit einem Elastizitätsmodul von 600 kg/mm² oder mehr besteht, die nahezu parallel zu dem Reifenäquator spiralförmig gewickelt sind, und einem Wulstfüller (9) mit einem im wesentlichen dreieckigen Querschnitt, der auf dem Wulstkern (5) zwischen dem Hauptteil und dem umgestülpten Teil (6b) der Karkasse angeordnet ist, wobei die Lauffläche (2) eine Breite (TW) zwischen Laufflächenkanten (E1, E2) in der axialen Richtung aufweist, die größer als die maximale Breite des Reifens in der axialen Richtung bei den Seitenwänden (3) ist, und die Oberfläche der Lauffläche eine annähernd bogenförmige Form in dem Meridianschnitt des Reifens aufweist, dadurch gekennzeichnet, daß der Wulstfüller (9) einen weichen Füllerteil SA aufweist, der aus einer Weichgummizusammensetzung mit einer Härte von 52 bis 63 Grad Shore A (50 bis 60 Grad JISA) besteht und sich von einer dem Wulstkern (5) benachbarten Bodenoberfläche radial nach außen erstreckt, und einen harten Füllerteil HA, der aus einer Hartgummizusammensetzung mit einer Härte von 73 bis 97 Grad Shore A (70 bis 95 Grad JISA) besteht und sich von dem weichen Füllerteil SA radial nach außen erstreckt, eine Höhe h1 des radial oberen Endes P1 des weichen Füllerteils SA von einer Wulstsohle das 0,20- bis 0,40-fache einer Höhe h0 des Laufflächenendes von der Wulstsohle (BL) ist und eine Höhe h2 des radial oberen Endes P2 des harten Füllerteils HA von der Wulstsohle (BL) das 0,50- bis 1,25-fache der Höhe h0 des Laufflächenendes ist.

2. Radialreifen für ein Motorrad nach Anspruch 1, dadurch gekennzeichnet, daß der weiche Füllerteil SA einen komplexen Elastizitätsmodul SE* von 40 bis 60 kg/cm² aufweist und der harte Füllerteil HA einen komplexen Elastizitätsmodul HE* von 200 bis 550 kg/cm² aufweist.

3. Radialreifen für ein Motorrad nach Anspruch 1 oder 2, dadurch gekennzeichnet, daß die Differenz (HE* - SE*) zwischen dem komplexen Elastizitätsmodul HE* des harten Füllerteils HA und dem komplexen Elastizitätsmodul SE* des weichen Füllerteils SA 150 kg/cm² oder mehr beträgt.

4. Radialreifen für ein Motorrad nach Anspruch 1, 2 oder 3, dadurch gekennzeichnet, daß der weiche Füllerteil SA im wesentlichen eine annähernd dreieckige Querschnittsform hat, die aus einer dem Wulstkern (5) benachbarten Bodenoberfläche, einer inneren schrägen Seitenoberfläche entlang dem Hauptteil der Karkasse (6a) und einer äußeren schrägen Seitenoberfläche besteht, und sich der harte Füllerteil HA von der äußeren schrägen Seitenoberfläche des weichen Füllerteils SA nach außen in der radialen Richtung erstreckt.

## Revendications

1. Pneumatique à carcasse radiale pour motocyclette, comprenant une carcasse (6) possédant une partie principale (6a), partant d'une bande de roulement (2) dans des flancs (3) vers une tringle (5) placée dans chacun de deux talons (4), et une paire de parties (6b) repliées autour de chaque tringle (5) et composées d'au moins une nappe de carcasse formée de câblés faisant un angle de 70 à 90° avec l'équateur du pneumatique, une couche (7) de ceinture placée radialement à l'extérieur de la carcasse (6) et dans la bande de roulement (2) et composée d'au moins une nappe de ceinture formée de câblés (11) ayant un module d'élasticité de 600 kg/mm² ou plus enroulés en spirale en direction presque parallèle à l'équateur du pneumatique, et une pointe de bourrage de talon (9) ayant une section pratiquement triangulaire placée sur le talon (5) entre la partie principale et la partie repliée (6b) de la carcasse, la bande de roulement (2) ayant une largeur (TW) entre les bords (E1, E2) de la bande de roulement dans la direction axiale qui est supérieure à la largeur maximale du pneumatique dans la direction axiale au niveau des flancs (3), et la surface de la bande de roulement ayant approximativement une forme en arc de courbe dans une section méridienne du pneumatique, caractérisé en ce que la pointe de bourrage de talon (9) comporte une partie tendre SA composée d'une composition de caoutchouc tendre ayant une dureté comprise entre 52 et 63° Shore A (50 à 60 JISA) disposée radialement vers l'extérieur depuis une surface inférieure adjacente à la tringle (5), et une partie dure HA composée d'une composition de caoutchouc dur ayant une dureté comprise entre 73 et 97° Shore A (70 à 95° JISA) disposée radialement vers l'extérieur depuis la partie tendre SA, la hauteur h1 de l'extrémité radialement supérieure P1 de la partie tendre SA par rapport à la base de talon étant comprise entre 0,20 et 0,40 fois la hauteur h0 de l'extrémité de la bande de roulement par rapport à la base de talon (BL), et la hauteur h2 de l'extrémité radialement supérieure P2 de la partie dure HA par rapport à la base (BL) de talon étant comprise entre 0,50 et 1,25 fois la hauteur h0 de l'extrémité de la bande de roulement.

2. Pneumatique à carcasse radiale pour motocyclette selon la revendication 1, caractérisé en ce que la partie tendre SA a un module complexe d'élasticité SE* compris entre 40 et 60 kg/cm², et la partie dure HA a un module complexe d'élasticité HE* compris entre 200 et 550 kg/cm².

3. Pneumatique à carcasse radiale pour motocyclette selon la revendication 1 ou 2, caractérisé en ce que la différence (HE* - SE*) entre le module complexe d'élasticité HE* de la partie dure HA et le module complexe d'élasticité SE* de la partie tendre SA est supérieure ou égale à 150 kg/cm².

4. Pneumatique à carcasse radiale pour motocyclette selon la revendication 1, 2 ou 3, caractérisé en ce que la partie tendre SA a pratiquement une forme approximativement triangulaire en coupe comprenant une surface inférieure adjacente à la tringle (5), une surface latérale oblique interne placée le long de la partie principale de la carcasse (6a) et une surface latérale oblique externe, et la partie dure HA est disposée vers l'extérieur dans la direction radiale depuis la surface latérale oblique externe de la partie tendre SA.
